# EUROPÄISCHE PATENTANMELDUNG

(11) **EP 2 537 815 A1**
(43) Veröffentlichungstag der Anmeldung: **26.12.2012**
(21) Anmeldenummer: 11005062.2
(22) Anmeldetag: 21.06.2011
(51) Int. Cl.: C02F 11/12, F26B 17/20

(54) **Anlage zum Trocknen von Schlämmen**

(71) Anmelder: Silber, Christel, 22045 Hamburg (DE)
(72) Erfinder: Silber, Christel, 22045 Hamburg (DE)
(74) Vertreter: von Hellfeld, Axel

(57) **Zusammenfassung**

Eine Anlage zum Trocknen von Schlämmen enthält eine Förderpumpe (4) zum Fördern von zu trocknendem Schlamm in mehrere Trocknerstufen (5a, 5b, 5c) und Heizmittel zum Heizen der Trocknerstufen. Es sind Mittel (16, 13, 15, 20) vorgesehen, um die einzelnen Trocknerstufen unabhängig voneinander auf eine vorgegebene Temperatur aufzuheizen.

## Beschreibung

Die Erfindung betrifft eine Anlage zum Trocknen von Schlämmen mit einer Förderpumpe zum Fördern von zu trocknendem Schlamm in einen Trockner mit mehreren Trocknerstufen und mit Heizmitteln zum Heizen dieser Trocknerstufen.

Eine solche Anlage zum Trocknen von Schlämmen ist aus der EP 0 945 409 B1 bekannt.

Die hier in Rede stehenden Schlämme fallen beispielsweise in kommunalen Kläranlagen an. Die Entsorgung solcher Schlämme wirft erhebliche technische Probleme auf, insbesondere hinsichtlich des Energieverbrauchs und der Umweltbelastung.

Solche Klärschlämme werden üblicherweise durch Trocknung aufbereitet, um ihre Masse zu reduzieren. Das so durch Trocknung gewonnene Produkt kann beispielsweise auf Feldern als Düngemittel ausgebracht oder zur Energieerzeugung verwendet werden.

Allerdings sind Klärschlämme häufig durch infektiöse Keime belastet, sodass sichergestellt werden muss, dass bei der Trocknung eine zuverlässige Hygienisierung erfolgt.

Aus der US-A-5,069,801 ist eine Trockneranlage bekannt, bei der der Trockner durch Scheiben zusammengesetzt ist. Eine gesteuerte Führung der Brüden (bei der Trocknung entstehender Wasserdampf) ist dort nicht gezeigt.

Beim Stand der Technik gemäß der EP 0 945 409 B1 ist ein Trockner mit mehreren Trocknerstufen vorgesehen, die kaskadenartig hintereinander geschaltet sind. Alle Trocknerstufen werden von einer zentralen Heizanlage mit der gleichen Vorlauftemperatur eines Wärmeträgers erhitzt. Die erforderliche Energie wird zum Beispiel mit fossilen Brennstoffen erzeugt, es ist dort aber auch der Einsatz von heißem Dampf oder anderen Heizgasen aus anderen Systemen möglich.

Der Betrieb derartiger Trockneranlagen hat gezeigt, dass bei den kaskadenartig angeordneten Stufen, insbesondere bei einer Anordnung der Stufen untereinander, nicht alle Stufen mit einer optimalen Eintrittstemperatur betrieben werden, also nicht die optimale Heizung erfahren.

Bei diesem Stand der Technik wird mit einem regelbaren Sauggebläse der gesamte Brüden aus allen Stufen über ein gemeinsames Rohrsystem abgesaugt und in einem Wäscher kondensiert.

Hiervon ausgehend liegt der vorliegenden Erfindung die Aufgabe zugrunde, eine Anlage zum Trocknen von Schlämmen der eingangs genannten Art derart auszubilden, dass mit hoher Energieeffizienz ein zuverlässig hygienisiertes Trockenprodukt gewonnen werden kann.

Hierzu lehrt die Erfindung bei einer Anlage zum Trocknen von Schlämmen mit kaskadenartig angeordneten Trocknerstufen Mittel, mit denen zumindest bei einigen der Trocknerstufen deren jeweilige Temperatur auf einen vorgebbaren Wert einstellbar ist. Es können mit diesen genannten Mitteln also die einzelnen Trocknerstufen des Trockners jeweils auf eine ihnen individuell zugeordnete Temperatur eingestellt werden und hierfür sind jeweils voneinander unabhängige Heizeinrichtungen für die einzelnen Trocknerstufen vorgesehen. Bevorzugt sind die den einzelnen Trocknerstufen zugeordneten Heizeinrichtungen jeweils mit einem Wärmeträgerkreislauf versehen, der für jede Trocknerstufe unabhängig von den anderen Trocknerstufen steuerbar ist. Als Wärmeträgermedium dient hier zum Beispiel ein Wärmeträgeröl.

Eine bevorzugte Ausgestaltung der Erfindung sieht vor, dass die in der kaskadenartigen Anordnung der Stufen als erstes angeordnete Trocknerstufe als Druckbehälter ausgebildet ist, in der ein Überdruck eingestellt werden kann. Auch ist diese erste, als Druckstufe ausgebildete Trocknerstufe auf Temperaturen über 110°C, bevorzugt über 120°C aufheizbar, um in diese Stufe eine zuverlässige Hygienisierung des Produktes zu erreichen.

Auch ist bevorzugt die genannte erste Trocknerstufe mit Mitteln versehen, um dort erzeugten Brüden einem Wärmetauscher zuzuführen, mit dem einer in der kaskadenartigen Trocknerstufenanordnung nachfolgenden Trocknerstufe Energie (Wärme) zuführbar ist. Damit ist es möglich, den in der ersten Stufe anfallenden Brüden, der einen hohen Energieinhalt besitzt, in der Anlage selbst energetisch effizient zu verwerten.

Die Erfindung sieht also vor, dass jede einzelne Stufe eines sogenannten Kaskadentrockners mit einem separaten Wärmeträgerkreislauf ausgerüstet wird. Damit kann dann jede Stufe je nach Bedarf mit unterschiedlicher Temperatur betrieben werden. Damit ermöglicht die Erfindung, die Temperaturen in den einzelnen Trocknerstufen auf den Zustand des in diesen Stufen jeweils anfallenden Schlammes optimal einzustellen. Dabei können einzelne Trocknerstufen jeweils mit dem dort für eine optimale Trocknung im Gesamtsystem benötigten Energiebedarf versorgt werden. Die einzelnen Trocknerstufen können hierfür jeweils einen eigenen Wärmeträgerkreislauf (z. B. ÖI) mit einer regelbaren Pumpe und verbindenden Rohrleitungen aufweisen.

Der in der ersten Trocknerstufe anfallende energetisch wertvolle Brüden kann verwendet werden, um einer oder mehreren in der Kaskade nachfolgenden Trocknerstufen jeweils Energie zuzuführen.

Nach der Erfindung wird der mehrere Trocknerstufen aufweisende kaskadenartige Trockner in einen Primärkreislauf und einen Sekundärkreislauf aufgeteilt. Der Primärkreislauf enthält die erste, oben beschriebene Trocknerstufe und der Sekundärkreislauf beinhaltet die in der Kaskade nachfolgenden Trocknerstufen. Der Primärkreislauf wird direkt von einer Heizquelle wie zum Beispiel einem Heizkessel mit thermischer Energie versorgt. Der die nachfolgenden Trocknerstufen enthaltende Sekundärkreislauf wird einerseits vom hochenergetischen Brüden aus dem Primärkreislauf und andererseits über gegebenenfalls vorhandene unabhängige Wärmequellen mit thermischer Energie versorgt.

Der Brüden aus dem Primärkreislauf kann auch ganz oder teilweise für andere energetische Anwendungen eingesetzt werden.

Der in den auf die erste Trocknerstufe folgenden Trocknerstufen anfallende Brüden wird wie beim genannten Stand der Technik einem Wäscher zugeführt und anschließend über einen Biofilter abgeführt.

Nachfolgend wird ein Ausführungsbeispiel der Erfindung anhand der Zeichnung näher beschrieben. Es zeigt:
Fig. 1 zeigt schematisch eine Anlage zum Trocknen von Schlämmen gemäß dem Stand der Technik, auf den die vorliegende Erfindung zurückgreift und von dem sie ausgeht;
Fig. 2 eine erfindungsgemäße Anlage zum Trocknen von Schlämmen.

Die zum Trocknen von Schlämmen, insbesondere Klärschlämmen, dienende Anlage hat einen Dünnschlammzulauf (1), eine mechanische Vorentwässerungseinrichtung (2), einen Vorlagebehälter (3), eine Förderpumpe (4), einen Trockner (5), eine Heizanlage (6), einen Brüdenwäscher (7), ein Abluftfilter (8), eine Austragsfördereinrichtung (9), und einen Ventilator (11).

Bei der Trockneranlage sind drei oder mehrere Trocknerstufen (5a, 5b, 5c) vorgesehen, die kaskadenartig nacheinander geschaltet sind, d.h. der zu trocknende Schlamm wird oben in die erste Trocknerstufe (5a) eingeführt und verlässt den Trockner 5 unten über die Austragfördereinrichtung (9). In den einzelnen Trocknerstufen (5a, 5b, 5c) sind jeweils in bekannter Weise Schneckenförderer zum Fördern des sukzessive getrockneten Materials vorgesehen.

Die bei Aufbringung von Hitze austretenden Brüden verlassen über einen Schacht (5d), der mit den einzelnen Trocknerstufen in kommunizierender Verbindung steht, über eine Brüdenleitung (7a) den Trockner (5) und werden dem Brüdenwäscher (7) zugeführt. In den Brüdenwäscher (7) wird über einen Wasserzulauf (7b) Brauchwasser eingeführt und der Brüden kondensiert und wird gewaschen. Das Waschwasser tritt sodann über einen Wasserrücklauf (7c) wieder aus. Die Abluft wird über eine Abluftleitung (7d) in ein Abluftfilter (8) eingeführt, wobei ein Ventilator (11) die Brüden durch den Brüdenwäscher (7) hindurchzieht, so dass im Trockner ein Druck herrscht, der geringer ist als der Umgebungsdruck.

Das aus dem Trockner (5) (unten) austretende trockene und in der Regel krümelige Produkt wird vom Schneckenförderer in der unteren Trocknerstufe (5c) auf die Austragsfördereinrichtung (9) aufgebracht und zum Beispiel einem Trockengutstapelbehälter (10) zugeführt und dann zum Beispiel abgefahren. Die untere Trockenstufe ist mit einer Vorrichtung versehen, die das Eindringen von Aussenluft und damit Sauerstoff in den Trockner verhindert. Damit wird der Sauerstoffgehalt in dem Trockner unter der Grenze der Selbstentzündung gehalten.

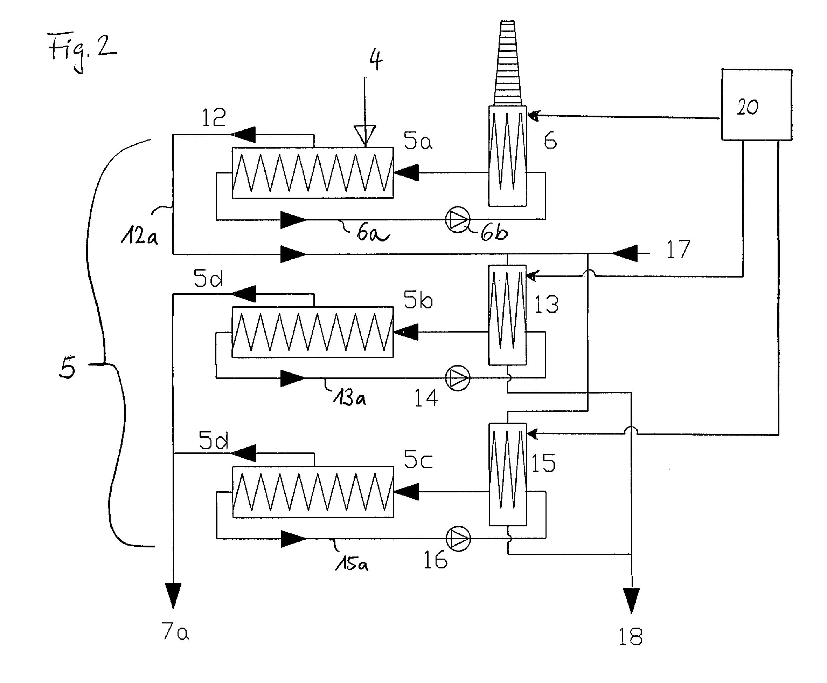

Die anhand der Figur 2 schematisch beschriebene vorliegende Erfindung bildet diesen Stand der Technik weiter insbesondere zur Verbesserung der Energieeffizienz und zur Sicherstellung einer zuverlässigen Hygienisierung des Produktes, d.h. einer Vermeidung der Belastung der Umwelt mit Keimen und dergleichen.

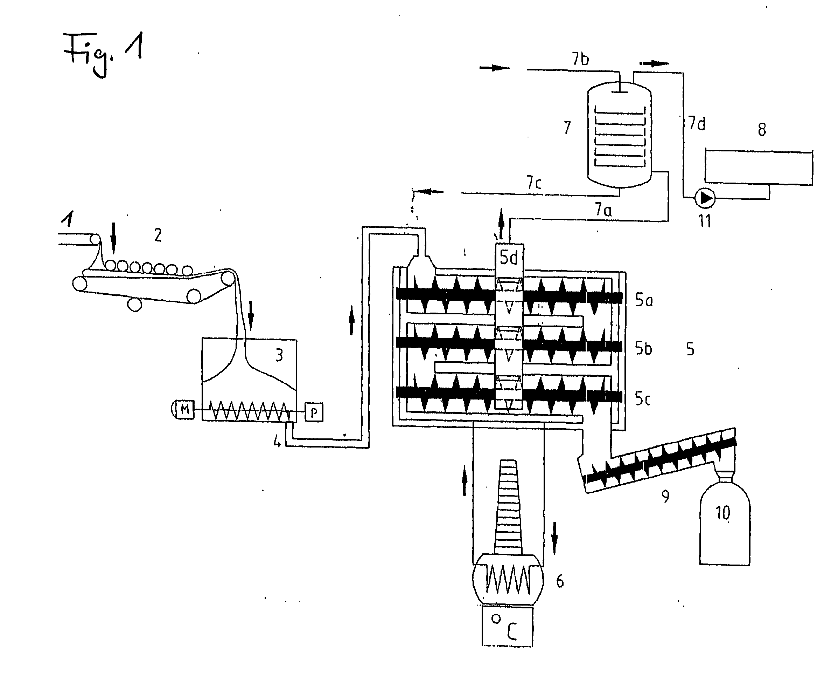

In Übereinstimmung mit dem Ausführungsbeispiel gemäß Figur 1 hat das erfindungsgemäße Ausführungsbeispiel gemäß Figur 2 auch drei Trocknerstufen (5a, 5b, 5c). Auch die dem Trockner (5) vorgeschalteten und nachgeschalteten Baugruppen können dem Ausführungsbeispiel gemäß Figur 1 entsprechen und sind zur Konzentration auf das Erfindungswesentliche in Figur 2 nicht noch einmal gezeigt. Einander entsprechende oder funktionsähnliche Bauteile sind in den Figuren jeweils mit den gleichen Bezugszeichen versehen. Nachfolgend werden die erfindungsgemäßen Abwandlungen der Anlage gemäß Figur 1 näher beschrieben, während die Übereinstimmungen mit dem Ausführungsbeispiel gemäß Figur 1 nicht noch einmal dargelegt werden. Dort also, wo die nachfolgende Beschreibung der Figur 2 nichts näher ausführt, wird auf die entsprechenden Merkmale und Komponenten der Anlage gemäß Figur 1 zurückgegriffen.

Jede einzelne Stufe (5a, 5b, 5c) des dreistufigen oder mehrstufigen Kaskadentrockners gemäß Figur 2 ist mit einem eigenen separaten Wärmeträgerkreislauf versehen. Das zu trocknende Material wird durch die Stufen und von Stufe zu Stufe, also in Figur 2 von oben nach unten geführt. Aufgrund des jeweils vorgesehenen eigenen Wärmeträgerkreislaufs kann jede Trocknerstufe (5a, 5b, 5c) oder mehrere davon nach Bedarf mit einer vorgebbaren und unabhängig von den anderen Stufen einstellbaren Temperatur betrieben werden.

Der ersten Trocknerstufe (5a) wird (in der oben beschriebenen bekannten Weise) über eine Förderpumpe (4) der zu trocknende Schlamm zugeführt. Eine Heizanlage (6) beschickt einen Wärmeträgerkreislauf (6a) mit einer Wärmeträgerpumpe (6b). Die in dem kaskadenartigen Trockner zuerst angeordnete Trocknerstufe (5a) ist als Druckstufe ausgebildet, in der ein gegenüber dem Umgebungsdruck erhöhter Druck größer 5 bar aufrechterhalten werden kann. In der Trocknerstufe (5a) wird eine Temperatur über 120 Grad Celsius eingestellt, so dass sichergestellt ist, dass das Produkt zuverlässig hygienisiert wird.

Bei der Trocknung in der ersten Trocknerstufe anfallender Brüden (12) wird über die Rohrleitung (12a) einem Wärmetauscher (13) zugeführt, der der zweiten Trocknerstufe (5b) zugeordnet ist und über einen Wärmeträgerkreislauf (13a) die zweite Trocknerstufe (5b) erhitzt. Eine Umwälzpumpe (14) zirkuliert diesen Wärmeträgerkreislauf. Die einzelnen Wärmeträgerkreisläufe werden messtechnisch überwacht und die zugehörigen Pumpen der einzelnen Trocknerstufen und auch die entsprechenden Bauteile der unten beschriebenen dritten Trocknerstufe (5c) werden über einen Rechner (20) angesteuert und selektiv betrieben.

Der heiße Brüden (12) aus der ersten Trocknerstufe (5a) erhitzt über den Wärmetauscher (13) das Wärmeträgermedium (Thermalöl) des Wärmeträgerkreislaufs (13a) der zweiten Trocknerstufe (5b) und soweit möglich eine der nachfolgenden Stufen. Bei Bedarf kann über einen Anschluss (17) auch Wärme aus einer externen Heizanlage oder anderen Wärmequellen wie zum Beispiel andere Prozessabwärme dem Wärmetauscher (13) zugeführt werden.

In der zweiten Trocknerstufe (5b) anfallender Brüden wird über die Ableitung (5d) und die Leitung (7a) (Figur 1) dem Brüdenwäscher (in Figur 2 nicht gezeigt) zugeführt.

Das in der zweiten Trocknerstufe (5b) erzeugte teilgetrocknete Produkt wird dann der dritten Trocknerstufe (5c) zugeführt, die analog der zweiten Trocknerstufe (5b) mit einem Wärmetauscher (15), einem Wärmeträgerkreislauf (15a) und einer diesen Kreislauf betreibenden Pumpe (16) versehen ist. Auch dieser Kreislauf wird messtechnisch überwacht und vom Rechner (20) gesteuert.

Bei diesem Ausführungsbeispiel gemäß Figur 2 wird auch dem Wärmetauscher (15) der dritten Trocknerstufe (5c) heißer Brüden (12) aus der ersten Trocknerstufe (5a) zugeführt, wie die in Figur 2 dargestellten Verbindungsleitungen zeigen. Zur wahlweisen Zuführung des Brüdens in die beschriebenen Wärmetauscher dienen jeweils 3-Wege-Ventile, die in Figur 2 der Übersichtlichkeit halber nicht einzeln wiedergegeben sind.

Mit der dargestellten Trockenanlage gemäß Figur 2 ist es unter Steuerung durch den Rechner möglich, die eingesetzte Primärenergie, also insbesondere die in der Heizanlage (6) der ersten Trocknerstufe erzeugte Wärme optimal einzusetzen und die Energie der so erzeugten Brüden auszunutzen. Auch kann der in der ersten Trocknerstufe (5a) erzeugte Brüden (12) in Abwandlung des dargestellten Ausführungsbeispieles anderweitig in anderen Prozessen verwendet werden, wobei dann aber die gegebenenfalls fehlende Energie über die Leitung (17) dem aus den Trocknerstufen (5b, 5c) bestehenden Sekundärkreis zugeführt werden muss.

In den Wärmetauschern (13, 15) anfallendes Brüdenkondensat (18) wird dem Abwasser zugeführt.

Die optimale Regelung der jeweils den einzelnen Trocknerstufen (5a, 5b, 5c) zugeführten Energie erfolgt mit dem Rechner (20) derart, dass in jeder Trocknerstufe eine optimale Temperatur vorliegt. Es hat sich gezeigt, dass bei kaskadenartigen Trocknungsanlagen nicht alle Stufen mit der gleichen Eingangstemperatur des Wärmeträgeröls betrieben werden müssen. Je nach dem Zustand des zu trocknenden Klärschlammes ermöglicht die anhand der Figur 2 beschriebene Trockneranlage eine Einstellung der in den einzelnen Trocknerstufen herrschenden Temperatur individuell bezogen auf den jeweiligen Zustand des Materials und die Trocknerstufe.

Die Anlage gemäß Figur 2 wird über den Rechner (20) auch hinsichtlich der Förderung des zu trocknenden Materials gesteuert. Zum Beispiel ist die Förderung des Materials aus der unter Überdruck stehenden ersten Trocknerstufe (5a) in die zweite Trocknerstufe (5b) über eine getaktet betriebene Druckschleuse möglich (in Figur 2 nicht näher dargestellt). In der ersten Trocknerstufe (5a) kann ein Überdruck bis zu 10 bar Dampfdruck eingestellt werden.

Der in allen Trocknerstufen anfallende überschüssige Brüden wird über ein Rohrleitungssystem und einen gesteuerten Absaugventilator mit Unterdruck aus den Trocknerstufen in einen Wäscher gesaugt, wie es in Figur 1 gezeigt ist.

## Patentansprüche

1. Anlage zum Trocknen von Schlämmen, mit
- einer Förderpumpe (4) zum Fördern von zu trocknendem Schlamm in einen Trockner (5), der mehrere Trocknerstufen (5a, 5b, 5c) aufweist, und mit Heizmitteln zum Heizen der Trocknerstufen,
- **gekennzeichnet durch** Mittel (20, 6, 13, 15), mit denen bei zumindest einem Teil der Trocknerstufen (5a, 5b, 5c), insbesondere bei mehreren Trocknerstufen, deren jeweilige Temperatur auf einen vorgebbaren Wert einstellbar ist.

2. Anlage nach Anspruch 1, **dadurch gekennzeichnet, dass** für zumindest einen Teil der Trocknerstufen (5a, 5b, 5c) oder für mehrere oder alle Trocknerstufen jeweils eine individuell einstellbare Heizeinrichtung vorgesehen ist.

3. Anlage nach Anspruch 2, **dadurch gekennzeichnet, dass** die individuell einstellbaren Heizeinrichtungen jeweils einen durch die der Heizeinrichtung zugeordnete Trocknerstufe führenden Wärmeträgerkreislauf haben.

4. Anlage nach einem der vorhergehenden Ansprüche, **dadurch gekennzeichnet, dass** die erste Trocknerstufe (5a) in dem Trockner (5) als Druckstufe ausgebildet ist.

5. Anlage nach einem der vorhergehenden Ansprüche, **dadurch gekennzeichnet, dass** in der ersten Trocknerstufe (5a) des Trockners (5) im Betrieb eine Temperatur größer als 100°C, insbesondere größer als 120°C eingestellt ist, insbesondere mit einem Druck größer 8 bar.

6. Anlage nach einem der vorhergehenden Ansprüche, **dadurch gekennzeichnet, dass** Mittel vorgesehen sind, um in der ersten Trocknerstufe (5a) erzeugten Brüden zur Heizung einer oder mehrerer in dem kaskadenartigen Trockner nachgeschalteter Trocknerstufen (5b, 5c) zu verwenden.

7. Verfahren zum Trocknen von Schlämmen, bei dem zu trocknender Schlamm durch einen Trockner (5) gefördert wird, der mehrere Trocknerstufen (5a, 5b, 5c) aufweist, die in der Förderrichtung nacheinander geschaltet sind und die einzeln geheizt werden, **dadurch gekennzeichnet, dass** in der in Förderrichtung zuerst angeordneten Trocknerstufe (5a) erzeugte Brüden in Wärmetauscher geleitet wird, die einem oder mehreren der nachgeschalteten Trocknerstufen zugeordnet sind, um in einem gesonderten Kreislauf eine oder mehrere der nachgeschalteten Trocknerstufen zu heizen.
